# EUROPÄISCHE PATENTSCHRIFT

(11) **EP 2 601 666 B1**
(45) Veröffentlichungstag und Bekanntmachung des Hinweises auf die Patenterteilung: **14.05.2014**
(21) Anmeldenummer: 11763580.5
(22) Anmeldetag: 25.07.2011
(51) Int. Cl.: H01H 37/76

(54) **ELEKTROMECHANISCHES ÜBERTEMPERATURSCHUTZELEMENT**
ELECTROMECHANICAL TEMPERATURE PROTECTION ELEMENT
ÉLÉMENT ÉLECTROMÉCANIQUE DE PROTECTION CONTRE UNE TEMPÉRATURE EXCESSIVE

(30) Priorität: 13.08.2010 DE 202010008276 U; 16.08.2010 DE 102010037014; 06.08.2010 DE 102010036886
(43) Veröffentlichungstag der Anmeldung: 12.06.2013
(73) Patentinhaber: Topinno GmbH, 52080 Aachen (DE)
(72) Erfinder: Willer, Bernd, 85368 Moosburg (DE)
(74) Vertreter: Kaufmann, Sigfrid
(86) Internationale Anmeldenummer: PCT/DE2011/075178
(87) Internationale Veröffentlichungsnummer: WO 2012/022347

(56) Entgegenhaltungen:
- WO-A1-2007/014816
- DE-A1- 10 226 357
- DE-A1-102008 027 189
- DE-U1-202006 007 613

## Beschreibung

Die Erfindung betrifft ein Übertemperaturschutzelement, das besonders für Photovoltaikanlagen geeignet ist, jedoch auch in anderen frei verdrahteten Elektroanlagen im Innen- und Außenbereich eingesetzt werden kann. In Photovoltaikanlagen dient das Übertemperaturschutzelement zur elektrischen Abtrennung der einzelnen Photovoltaikmodule in Gefahrenfällen. Das Übertemperaturschutzelement erfüllt zudem alle elektro- und sicherheitstechnischen Anforderungen, die an für den Betrieb in Photovoltaikanlagen zertifizierte Verbindungselemente gestellt werden.

In Photovoltaikanlagen sind die einzelnen Photovoltaikmodule üblicherweise in Serie geschaltet. Am Ende der Kette können bei starkem Sonneneinfall Spannungen von bis zu 1000 V Gleichspannung und Ströme von 8 bis 16 A auftreten. In Gefahrenfällen, wie z.B. beim Brand eines Dachstuhls, auf dem eine Photovoltaikanlage installiert ist, oder bei der Kollision eines Kraftfahrzeugs mit einer Freifeldanlage, besteht somit für die Rettungskräfte oder die in den Unfall verwickelten Personen eine akute Gefahr, mit lebensgefährlichen elektrischen Spannungen bzw. Strömen in Kontakt zu kommen.

Momentan beschränken sich die Sicherheitsvorkehrungen für Photovoltaikanlagen im Freifeld darauf, dass diese eingezäunt werden. Bei auf Dächern installierten Photovoltaikanlagen wurde bislang auf Sicherheitsvorkehrungen verzichtet, da diese ohnehin schwer erreichbar sind.

Auf Grund der ständigen Zunahme der Anzahl und der Größe von Photovoltaikanlagen erhöht sich auch das Risiko, dass Personen durch von Photovoltaikanlagen verursachte Stromschläge Schaden nehmen und schlimmstenfalls sogar getötet werden. Demnach ist es notwendig, zusätzliche Sicherheitsvorkehrungen für den Betrieb von Photovoltaikanlagen zu treffen.

Aus dem Stand der Technik sind wenige Lösungsvorschläge bekannt, die das Ziel haben, die Gefahr von Stromschlägen durch Photovoltaikanlagen zu verringern, oder die zumindest zu diesem Zweck eingesetzt werden können.

So wird in US 4,380,001 A eine Sicherung beschrieben, die sowohl beim Überschreiten eines Strom- als auch eines Temperaturwertes eine elektrische Unterbrechung bewirkt. Hierzu sind in einem Gehäuse in jeweils separaten Kammern ein Schmelzdrahtelement und ein temperatursensitives Element untergebracht. Beide Elemente sind in Serie geschaltet. Das temperatursensitive Element kann entweder als mit Kiefernharz überzogenes Lötmetall oder als Bimetall-Thermostatschalter ausgeführt sein. Beim Überschreiten einer kritischen Temperatur schmilzt das Lötmetall und der Thermostatschalter öffnet.

Die Sicherung ist zwar prinzipiell in der Lage, auch bei einer durch Brand verursachten Temperaturerhöhung Stromkreise zu öffnen. Jedoch ist weder durch den Einsatz des Lötmetalls noch des Thermostatschalters eine sichere und dauerhafte Trennung von Spannungen bis 1000 V möglich.

In JP 11040838 A wird vorgeschlagen, eine Temperatursicherungseinheit in die ausgehende Leitung von Photovoltaikmodulen mit dem Ziel zu schalten, die während eines Brandes bzw. nach einem Brand für das Rettungs- bzw. Servicepersonal bestehende Gefahr von Stromschlägen zu verringern. Die Funktionsweise der Temperatursicherungseinheit ist nicht näher spezifiziert.

Um Funkenüberschläge beim Auftrennen von Photovoltaikanlagen zu vermeiden, ist wegen der hohen auftretenden Spannungen eine vergleichsweise große Trennstrecke erforderlich. In der Schrift ist jedoch an keiner Stelle beschriebenen, wie mit der Temperatursicherungseinheit eine solche Trennstrecke realisierbar ist. Des Weiteren haben beide vorgenannten Sicherungen den Nachteil, dass sie, wie bei Rettungsaktionen oftmals erforderlich, nicht durch einen von den Rettungskräften ausgeübten Schlag oder Stoß ausgelöst werden können.

In DE 10 2008 027 189 A1 wird ein Übertemperaturschutzelement für Photovoltaikanlagen vorgestellt, das einzelne Photovoltaikmodule in Gefahrenfällen voneinander trennt. Das Übertemperaturschutzelement besteht aus einem zweiteiligen Sicherungskörper, in dem ein aus einem Steckerstift und einer Buchse bestehendes, trennbares elektrisches Verbindungselement sowie eine vorgespannte Druckfeder angeordnet sind. Bevorzugt weisen die beiden Teile des Sicherungskörpers auf einer Seite eine Öffnung auf, wobei die Öffnung des einen Teils aufgeweitet ist und das andere Teil mit seiner offenen Seite in die aufgeweitet Öffnung gesteckt ist. Damit die Druckfeder die beiden Teile nicht auseinander drückt, ist die Außenwand des eingesteckten mit der Innenwand des aufgeweiteten Teils verlötet.

Mit dem Übertemperaturschutzelement werden zwar Photovoltaikmodule bei Bränden sicher voneinander getrennt; auch ein mechanisches Auslösen ist möglich. Da jedoch die Lötstelle, die die beiden Teile des Sicherungskörpers verbindet, neben den hohen, permanenten durch die Feder bewirkten Scherkräften auch Umwelteinflüssen wie Temperaturschwankungen, Feuchtigkeit und UV-Strahlung ausgesetzt ist, löst sich die Lötstelle oftmals schon nach einigen Monaten und führt zu unkontrolliertem Abschalten der Photovoltaikmodule.

Aufgabe der Erfindung ist es, die Nachteile des Standes der Technik zu beseitigen.

Insbesondere soll ein Übertemperaturschutzelement für Photovoltaikanlagen oder andere frei verdrahtete Elektroanlagen geschaffen werden, das beim Überschreiten einer Temperaturgrenze, wie z.B. im Falle eines Brandes, oder bei Einwirkung eines mechanischen Stoßes bzw. Schlages, sicher eine dauerhafte elektrische Trennung der einzelnen Photovoltaikmodule bewirkt, bei dem jedoch ungewollte Abschaltungen ausgeschlossen sind. Das Übertemperaturschutzelement soll zudem alle elektro- und sicherheitstechnischen Anforderungen erfüllen, die an für den Betrieb in Photovoltaikanlagen zertifizierte Verbindungselemente gestellt werden.

Diese Aufgabe wird erfindungsgemäß durch die kennzeichnenden Merkmale des Anspruchs 1 gelöst; vorteilhafte Ausgestaltungen und Verwendungen der Erfindung ergeben sich aus den Ansprüchen 2 bis 9.

Ausgegangen wird von einem elektromechanischen Übertemperaturschutzelement für Photovoltaikanlagen (das jedoch in gleicher Weise auch für andere frei verdrahtete Elektroanlagen im Innen- und Außenbereich verwendet werden kann) mit einer für Photovoltaikanlagen zertifizierten Steckverbindung, die aus einer Buchse und einem Stecker besteht, sowie einem Gehäuse, das die Steckverbindung koaxial umschließt. Das Gehäuse besteht aus einem Rohrelement, dessen Stirnseiten mit Deckelplatten verschlossen sind. Im Gehäuse befindet sich ein auf Druck vorgespanntes Druckkraftelement, wie z.B. eine Spiralfeder, das zwischen den beiden Deckelplatten eingespannt ist.

Nach Maßgabe der Erfindung ist auf der ins Gehäuseinnere gerichteten Seite an der einen Deckelplatte der Stecker und an der anderen Deckelplatte die Buchse der Steckverbindung befestigt. Auf den Außenseiten der Deckelplatten befinden sich jeweils Anschlusselemente, die mit der Buchse bzw. dem Stecker elektrisch verbunden sind. Die Geometrie des Gehäuses ist so mit der Steckverbindung abgestimmt, dass bei geschlossenem Gehäuse auch die Steckverbindung geschlossen ist. Sobald jedoch das Gehäuse geöffnet wird, indem z.B. das Druckkraftelement mindestens eine der Deckelplatten vom Rohrelement wegdrückt, löst sich auch die Steckverbindung, und der elektrische Kontakt wird unterbrochen.

Mindestens eine der Deckelplatten weist, bei geschlossenem Gehäuse und in Längsrichtung des Rohrelements gesehen, einen ersten Abschnitt auf, bei dem die Geometrie der Stirnfläche der Deckelplatte so groß ist, das diese die Öffnung in der Stirnseite des Rohrelements vollständig überdeckt. Üblicherweise ist die Stirnfläche der Deckelplatte in etwa so groß gewählt, wie der Außendurchmesser des Rohrelements. Auf der zum Rohrelement gewandten Seite weist die Deckelplatte einen zweiten Abschnitt auf, bei dem die Stirnfläche gerade um so viel kleiner als die lichte Weite des Rohrelements gewählt ist, dass der zweite Abschnitt in das Rohrelement eingeschoben werden kann, dabei jedoch kein größerer Luftspalt zwischen dessen Seitenwand und der Innenwand des Rohrelements entsteht.

In der Seitenwand des zweiten Abschnitts und auf der Innenseite des Rohrelements ist mindestens eine Vertiefung eingebracht. Bei geschlossenem Gehäuse liegt die mindestens eine Vertiefung auf der Seitenwand des zweiten Abschnitts der mindestens einen Vertiefung auf der Innenseite des Rohrelements gegenüber, sodass durch die beiden Vertiefungen ein Hohlraum gebildet wird. Bei jedem derartigen Hohlraum ist in die Wand des Rohrelements ein Durchbruch eingebracht, der im Hohlraum endet. Über den Durchbruch kann der Hohlraum mit einem Schmelzmaterial gefüllt werden, das einen Schmelzpunkt von 120 bis 250 °C hat. Geeignete Materialien sind z.B. kommerzielle Schmelzkleber aus Polyamid Sie haben den Vorteil, dass sie weitgehend resistent gegenüber Witterungseinflüssen sind, insbesondere resistenter als viele Metalle, wie z.B. Lötzinn.

Solange das in den Hohlraum eingefüllte Schmelzmaterial fest ist, ist die Deckelplatte, trotz der auf sie wirkenden Federkraft, gegenüber einem Herausdrücken aus dem Rohrelement gesichert. Im Falle eines Brandes erweicht das Schmelzmaterial, die Deckelplatte wird aus dem Rohrelement gedrückt und die Steckverbindung getrennt. Fehlfunktionen sind praktisch ausgeschlossen, da sich das Schmelzmaterial im Innern des Gehäuses befindet und somit gut vor Witterungseinflüssen geschützt ist.

In einer bevorzugten Ausführungsform hat das Rohrelement einen kreisrunden Querschnitt. Die mindestens eine Vertiefung auf der Seitenwand des zweiten Abschnitts und auf der Innenseite des Rohrelements ist jeweils als umlaufende Nut ausgeformt, die über eine Bohrung im Rohrelement mit dem Schmelzkleber befüllt werden kann. Durch den erstarrten Schmelzkleber wird ein O-Ring gebildet, durch den, solange der Schmelzkleber fest ist, die Deckelplatte gegenüber einem Herausdrücken gesichert ist.

Es ist vorgesehen, dass das Übertemperaturschutzelement auf der einen Seite die sich bei Hitze lösende Deckelplatte und auf der andern Seite eine fest fixierte Deckelplatte besitzt.

Die fest fixierte Deckelplatte weist, ähnlich wie die sich bei Hitze lösende, in Längsrichtung des Rohrelements gesehen (bei geschlossenem Gehäuse) einen ersten Abschnitt auf, der ebenfalls die Öffnung in der Stirnseite des Rohrelements vollständig überdeckt. Auch weist die Deckelplatte auf der zum Rohrelement gewandten Seite einen zweiten Abschnitt auf, bei dem die Stirnfläche kleiner gewählt ist, als die lichte Weite des Rohrelements, d.h., auch der zweite Abschnitt der fixierten Deckelplatte ist in das Rohrelement einschiebbar. Zum Schutz vor einem Herausdrücken durch die Federkraft des Druckelements ist die Deckelplatte mittels Fixierstiften befestigt, die in orthogonal durch die Wand des Rohrelements verlaufenden und in die Seitenwand des zweiten Abschnitts der fixierten Deckelplatte hineinreichende Bohrungen eingebracht sind. Bevorzugt werden hierzu drei Fixierstifte, die bezüglich der kreisrunden Geometrie des Querschnitts des Rohrelements jeweils um einen Winkel von 120° zueinander versetzt sind, verwendet.

Denkbar sind auch Varianten, bei denen sich der zweite Abschnitt der Deckelplatten nicht innerhalb des Rohrelements befindet, sondern die Deckelplatten in Art einer Kappe ausgeformt sind, und jeweils der zweite Abschnitt der Deckelplatten über ein Ende des Rohrelements gestülpt ist.

Um auch bei ausgelöstem Übertemperaturschutzelement eine hohe Berührungssicherheit sicherzustellen, sind sowohl der Stecker als auch die Buchse der Steckverbindung mit Isolierhülsen umgeben, die die elektrischen Kontakte des Steckers sowie der Buchse zusätzlich, d.h. auch bei geöffnetem Gehäuse, ummanteln.

Des Weiteren ist vorgesehen, das Rohrelement aus einem spröden Material, wie z.B. Keramik oder Steingut, zu fertigen. So können bei Rettungsaktionen, z.B. durch einen gezielten Schlag mit einer Feuerwehraxt, auch Übertemperaturschutzelemente von Photovoltaikmodulen ausgelöst werden, die noch nicht vom Feuer erreicht wurden.

Eine besonders einfache Integration in den elektrischen Stromkreis von Photovoltaikanlagen wird möglich, wenn das Übertemperaturschutzelement als Zwischenstück in bereits bestehende Steckverbindungen eingesetzt wird. Hierzu sind jeweils das Anschlusselement der einen Deckelplatte als Buchse und das Anschlusselement der anderen Deckelplatte als Stecker der bereits bestehenden Steckverbindung auszuführen.

Das erfindungsgemäße Übertemperaturschutzelement wird nachfolgend anhand eines Ausführungsbeispiels näher erläutert; hierzu zeigt die Figur ein Übertemperaturschutzelement im Längsschnitt und in Draufsicht die beiden Deckelplatten.

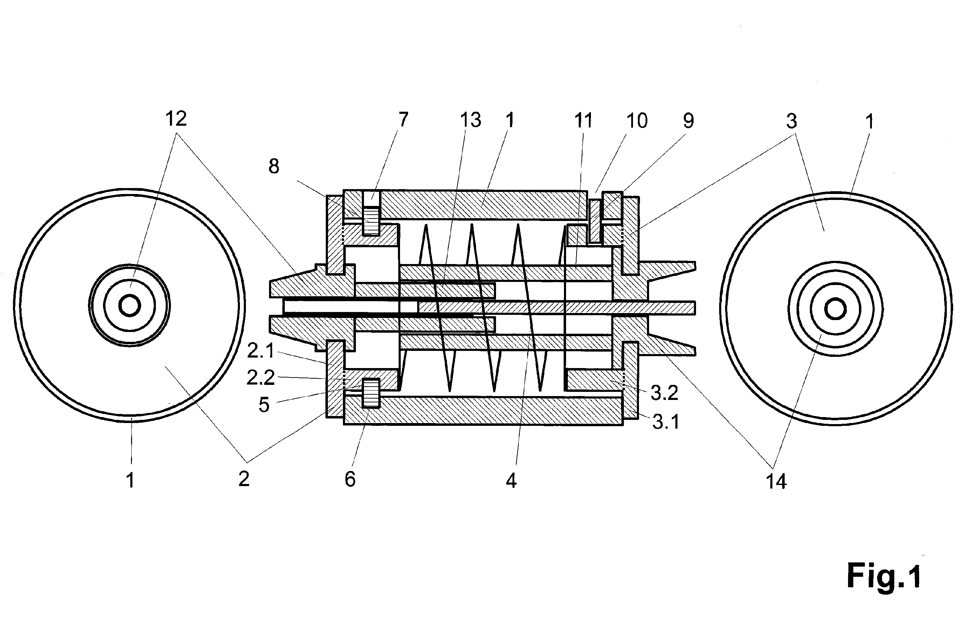

Wie aus der Figur 1 ersichtlich, besteht das Gehäuse des Übertemperaturschutzelements aus einem Keramikrohr 1, dessen Stirnseiten mittels einer sich unter dem Einfluss von Wärme lösenden Deckelplatte 2 und einer fest mit dem Keramikrohr 1 verbundenen Deckelplatte 3 verschlossen sind. Die beiden Deckelplatten 2, 3 weisen jeweils erste Abschnitte 2.1,3.1, die die beiden Öffnungen an den Stirnseiten des Keramikrohrs 1 vollständig überdecken und daran anschließend zweite Abschnitte 2.2,3.2 auf, die in das Keramikrohr 1 eingeschoben sind. Im Innern des Gehäuses befindet sich die auf Druck vorgespannte Spiralfeder 4.

Um zu verhindern, dass die Feder 4 die Deckelplatte 2 nach außen bewegt, ist eine Ringnut 5 auf der Seitenwand des Abschnitts 2.2 der Deckelplatte 2 und eine Ringnut 6 auf der Innenseite des Keramikrohrs 1 eingebracht. Die beiden Nuten 5, 6 liegen direkt gegenüber und bilden infolgedessen einen Hohlraum, der über die Bohrung 7 mit dem Schmelzkleber 8 (bzw. mit Polyamid) befüllbar ist. Bei üblichen Betriebstemperaturen ist der Schmelzkleber 8 fest und bildet eine Art O-Ring, der ein Verschieben der Deckelplatte 2 verhindert. Die Deckelplatte 3 ist mit den drei Fixierstiftern 9, die in jeweils um 120° versetzten Bohrungen 10 eingepasst sind, fest (auch bei hohen Temperaturen) mit dem Keramikrohr 1 verbunden.

Auf ihrer nach innen gewandten Seite trägt die Deckelplatte 2 die mit einem Kunststoffrohr ummantelte Buchse 11 und auf Ihrer Außenseite als Anschlusselement 12 einen standardisierten Photovoltaik-Einbaustecker. Entsprechend sind auf der nach innen gewandten Seite der Deckelplatte 3 der mit einem hitzebeständigen Kunststoff ummantelte Stecker 13 und auf seiner Außenseite als Anschlusselement 14 eine standardisierte Photovoltaik-Einbaubuchse befestigt. Zum Einbau des Übertemperaturschutzelements ist es lediglich erforderlich, die bereits vorhandene standardisierte Steckverbindung des Photovoltaikmoduls zu öffnen und das Übertemperaturschutzelement als Zwischenstück einzusetzen.

Im Falle eines Brandes erweicht der Schmelzkleber 8, die Deckelplatte 2 wird durch die Feder 4 nach außen gedrückt, wodurch die durch die Buchse 11 und den Stecker 13 gebildete Steckverbindung geöffnet und die elektrische Verbindung unterbrochen wird. Alternativ dazu ist es auch möglich, das spröde Keramikrohr 1 durch einen gezielten Schlag (z.B. mit einer Feuerwehraxt) zu zerstören. Da sowohl die Buchse 11 als auch der Stecker 13 mit einem hitze- und schlagbeständigen Kunststoff (Duroplast) ummantelt sind, ist eine ungewollte Berührung der elektrischen Kontakte auch bei einem geöffneten bzw. zerstörten Gehäuse praktisch ausgeschlossen.

### Liste der verwendeten Bezugszeichen

- 1: Rohrelement/Keramikrohr
- 2: Deckelplatte (mit Schmelzkleber befestigt)
- 2.1: erster Abschnitt der mit Schmelzkleber befestigten Deckelplatte
- 2.2: zweiter Abschnitt der mit Schmelzkleber befestigten Deckelplatte
- 3: Deckelplatte (fest verbunden)
- 3.1: erster Abschnitt der fest verbundenen Deckelplatte
- 3.2: zweiter Abschnitt der fest verbundenen Deckelplatte
- 4: Druckelement/Druckfeder
- 5: Vertiefung/Ringnut (in der Deckelplatte)
- 6: Vertiefung/Ringnut (im Keramikrohr)
- 7: Durchbruch/Bohrung
- 8: schmelzendes Material/Schmelzkleber
- 9: Fixierstift
- 10: Bohrung (für Fixierstift)
- 11: Buchse
- 12: Anschlusselement der mit Schmelzkleber befestigten Deckelplatte/Photovoltaik-Einbaustecker
- 13: Stecker
- 14: Anschlusselement der fest verbundenen Deckelplatte/Photovoltaik-Einbaubuchse

## Patentansprüche

1. Elektromechanisches Übertemperaturschutzelement für Photovoltaikanlagen mit einer für Photovoltaikanlagen zertifizierten Steckverbindung, die aus einer Buchse (11) sowie einem Stecker (13) besteht, und einem Gehäuse, das die Steckverbindung koaxial umschließt, wobei das Gehäuse aus einem Rohrelement (1) gebildet ist, dessen beide Stirnseiten mit Deckelplatten (2,3) verschlossen sind, und im Gehäuse ein auf Druck vorgespanntes Druckkraftelement (4) zwischen beiden Deckelplatten (2,3) eingespannt ist, wobei auf jeweils der ins Gehäuseinnere gerichteten Seite an der einen Deckelplatte (3) der Stecker (13) und an der anderen Deckelplatte (2) die Buchse (11) der Steckverbindung befestigt ist, und sich auf den Außenseiten der Deckelplatten (2,3) jeweils Anschlusselemente (12,14), die mit der Buchse (11) bzw. dem Stecker (13) elektrisch verbunden sind, befinden, wobei die Geometrie des Gehäuses so gewählt ist, dass bei geschlossenem Gehäuse die Steckverbindung geschlossen ist, wobei mindestens eine der Deckelplatten (2) in Längsrichtung des Rohrelements (1) einen ersten Abschnitt (2.1), bei dem die Geometrie der Stirnfläche der Deckelplatte (2) so gewählt ist, das diese die Öffnung in der Stirnseite des Rohrelements (1) vollständig überdeckt, und daran anschließend auf der zum Rohrelement (1) gewandten Seite einen zweiten Abschnitt (2.2) aufweist, bei dem die Geometrie der Stirnfläche so gewählt ist, das die Stirnfläche des zweiten Abschnitt (2.2) passgenau in das Rohrelement (1) einschiebbar ist, und in der Seitenwand des zweiten Abschnitts (2.2) sowie auf der Innenseite des Rohrelements (1) mindestens eine Vertiefung (5,6) eingebracht ist, wobei bei geschlossenem Gehäuse die mindestens eine Vertiefung (5) auf der Seitenwand des zweiten Abschnitts der mindestens einen Vertiefung (6) auf der Innenseite des Rohrelements (1) gegenüber liegt, und in der Wand des Rohrelements (1) mindestens ein in der Vertiefung (6) auf der Innenseite des Rohrelements (1) endender Durchbruch (7) eingebracht ist, mittels dem der aus den beiden gegenüberliegenden Vertiefungen (5,6) gebildete Hohlraum mit einem bei einer Temperatur von 120 bis 250 °C schmelzenden Material (8) befüllt ist, das im festen Zustand mechanisch so stabil ist, dass die Deckelplatte (2), trotz der auf sie wirkenden Federkraft, gegenüber Herausdrücken aus dem Rohrelement gesichert ist.

2. Elektromechanisches Übertemperaturschutzelement nach Anspruch 1, **dadurch gekennzeichnet, dass** das Rohrelement (1) einen kreisrunden Querschnitt hat, wobei die mindestens eine Vertiefung (5) auf der Seitenwand des zweiten Abschnitts (2.2) sowie auf der Innenseite des Rohrelements (1) jeweils als umlaufende Ringnut und der mindestens eine Durchbruch (7) in der Wand des Rohrelements (1) als Bohrung ausgeführt sind.

3. Elektromechanisches Übertemperaturschutzelement nach Anspruch 2, **dadurch gekennzeichnet, dass** neben der sich bei Hitze lösenden Deckelplatte (2) als zweite Deckelplatte (3) eine fest mit dem Rohrelement (1) verbundene Platte eingesetzt ist, die in Längsrichtung des Rohrelements (1) einen ersten Abschnitt (3.1), bei der die Geometrie der Stirnfläche der Deckelplatte (3) so gewählt ist, dass diese die Öffnung in der Stirnseite des Rohrelements (1) vollständig überdeckt, und daran anschließend auf der zum Rohrelement (1) gewandten Seite einen zweiten Abschnitt (3.2) aufweist, bei dem die Geometrie der Stirnfläche kleiner gewählt ist, als die lichte Weite des Rohrelements (1), wodurch der zweite Abschnitt (3.2) in das Rohrelement (1) einschiebbar ist, und die Deckelplatte (3) mittels Fixierstiften, welche in orthogonal durch die Wand des Rohrelements (1) verlaufende und in die Seitenwand des zweiten Abschnitts (3.2) der Deckelplatte (3) hineinreichende Bohrungen (10) eingebracht sind, fest mit dem Rohrelement (1) verbunden ist.

4. Elektromechanisches Übertemperaturschutzelement nach Anspruch 3, **dadurch gekennzeichnet, dass** die fest mit dem Rohrelement (1) verbundene Deckelplatte (3) mittels dreier Fixierstifte (10) befestigt ist, die bezüglich der kreisrunden Geometrie des Querschnitts des Rohrelements (1) jeweils um einen Winkel von 120° zueinander versetzt sind.

5. Elektromechanisches Übertemperaturschutzelement nach Anspruch 1 bis 4, **dadurch gekennzeichnet, dass** sowohl der Stecker (13) als auch die Buchse (11) der zertifizierten Steckverbindung mit Isolierhülsen umgeben sind, die die elektrischen Kontakte des Steckers (13) bzw. der Buchse (11) auch bei ausgelöstem Übertemperaturschutzelement berührungssicher ummanteln.

6. Elektromechanisches Übertemperaturschutzelement nach Anspruch 1 bis 5, **dadurch gekennzeichnet, dass** der durch die Vertiefungen (5, 6) gebildete Hohlraum mit einem Schmelzkleber befüllt ist.

7. Elektromechanisches Übertemperaturschutzelement nach Anspruch 1 bis 6, **dadurch gekennzeichnet, dass** das Rohrelement (1) aus einem spröden Material gefertigt ist.

8. Elektromechanisches Übertemperaturschutzelement nach Anspruch 7, **dadurch gekennzeichnet, dass** das Rohrelement (1) aus Keramik oder Steingut besteht.

9. Verwendung des elektromechanischen Übertemperaturschutzelements nach Anspruch 1 zum Einfügen in eine bereits bestehende Steckverbindung, wobei jeweils das Anschlusselement der einen Deckelplatte (2) als Photovoltaik-Einbaubuchse (12) und das Anschlusselement der anderen Deckelplatte (3) als Photovoltaik-Einbaustecker (14) in der Art der bereits bestehenden Steckverbindung ausgeführt ist.

## Claims

1. An electromechanical excess temperature protection element for photovoltaic systems, having a plug-in connector rated for photovoltaic systems, which is comprised of a bushing (11) and a plug (13), and a housing, which coaxially surrounds the plug-in connector, wherein the housing is formed from a tube element (1), the two front faces of which are closed by cover plates (2,3), and wherein a pressure element (4) pre-stressed on pressure is clamped in the housing between the two cover plates (2,3), wherein at the side facing the housing interior the plug (13) is attached to the one cover plate (3), and the bushing (11) of the plug-in connector is attached to the other cover plate (2), and wherein connecting elements (12, 14), each being electrically connected to the bushing (11), or the plug (13), respectively, are located on the exterior sides of the cover plates (2, 3), wherein the geometry of the housing is selected such that with a closed housing the plug-in connector is closed, wherein at least one of the cover plates (2) in longitudinal direction of the tube element (1) has a first section (2.1), in which the geometry of the front face of the cover plate (2) is selected such that the same completely covers the opening at the front face of the tube element (1), and connected to the same has a second section (2.2) at the side facing the tube element (1), in which the geometry of the front face is selected such that the front face of the second section (2.2) may be inserted into the tube element (1) in a precisely fitting manner, and at least one recess (5, 6) is incorporated in the side wall of the second section (2.2) and in the interior side of the tube element (1), wherein with a closed housing the at least one recess (5) in the side wall of the second section is positioned opposite of the at least one recess (6) in the interior side of the tube element (1), and wherein a breakthrough (7) ending in the recess (6) in the interior side of the tube element (1) is incorporated in the wall of the tube element (1), by means of which the hollow space formed by the two recesses (5, 6) positioned opposite of each other is filled with a material (8) melting at a temperature of 120 to 250°C, which is mechanically stable enough in its solid state such that the cover plate (2) is still secured from being pushed out of the tube element despite of the spring force acting upon the same.

2. The electromechanical excess temperature protection element according to claim 1, **characterized in that** the tube element (1) has a circular cross-section, wherein the at least one recess (5) in the side wall of the second section (2.2) and in the interior side of the tube element (1) is embodied as a circumferential annular groove, and the at least one breakthrough (7) in the wall of the tube element is embodied as a bore.

3. The electromechanical excess temperature protection element according to claim 2, **characterized in that** in addition to the cover plate (2) dissolving with heat as the second cover plate (3), a plate is utilized, which is firmly connected to the tube element, which in longitudinal direction of the tube element (1) has a first section (3.1), in which the geometry of the front face of the cover plate (3) is selected such that the same completely covers the opening in the front face of the tube element (1), and connected to the same has a second section (3.2) on the side facing the tube element (1), in which the geometry of the front face is selected smaller than the clearance diameter of the tube element (1), by means of which the second section (3.2) may be inserted into the tube element (1, and wherein the cover plate (3) is firmly connected to the tube element (1) by means of locating pins incorporated in bores (10) orthogonally extending through the wall of the tube element (1), and reaching into the side wall of the second section (3.2) of the cover plate (3).

4. The electromechanical excess temperature protection element according to claim 3, **characterized in that** the cover plate (3) firmly connected to the tube element (1) is attached via three locating pins (10), which are each offset at an angle of 120° to each other with regard to the circular geometry of the cross-section of the tube element (1).

5. The electromechanical excess temperature protection element according to claims 1 to 4, **characterized in that** both the plug (13) and the bushing (11) of the rated plug-in connector are surrounded by isolating sheaths, which cover the electrical contacts of the plug (13), or of the bushing (11), respectively, even with an activated excess temperature protection element, in a shockproof manner.

6. The electromechanical excess temperature protection element according to claims 1 to 5, **characterized in that** the hollow space formed by the recesses (5, 6) is filled with a hot-melt adhesive.

7. The electromechanical excess temperature protection element according to claims 1 to 6, **characterized in that** the tube element (1) is made from a brittle material.

8. The electromechanical excess temperature protection element according to claim 7, **characterized in that** the tube element (1) is comprised of ceramics or stone ware.

9. A use of the electromechanical excess temperature protection element according to claim 1 for inserting an already existing plug-in connector, wherein the connecting element of the one cover plate (2) is embodied as a photovoltaic mounting bushing (12), and the connecting element of the other cover plate (3) is embodied as a photovoltaic mounting plug (14) in the manner of the already existing plug-in connector.

## Revendications

1. Élément électromécanique de protection anti-surchauffe pour installations photovoltaïques, avec une connexion par enfichage certifiées pour les installations photovoltaïques, constituée d'une douille (11) et d'une fiche (13), et un boîtier entourant coaxialement la connexion par enfichage, dans lequel le boîtier est formé par un élément tubulaire (1) dont les deux côtés frontaux sont fermés par des plaques de couverture (2, 3), et un élément à force de pression (4) précontraint en pression est serré entre les deux plaques de couverture (2, 3) dans le boîtier, dans lequel, du côté respectivement orienté vers l'intérieur du boîtier, la fiche (13) est fixé à l'une des plaques de couverture (3) et la douille (11) de la connexion par enfichage est fixée à l'autre plaque de couverture (2), et des éléments de raccordement (12, 14) sont prévus respectivement du côté extérieur des plaques de couverture (2, 3), lesquels sont reliés à la douille (11) ou à la fiche (13), dans lequel la géométrie du boîtier est choisie de manière à ce que lorsque le boîtier est fermé, la connexion par enfichage est fermée, dans lequel au moins l'une des plaques de couverture (2) comporte une première section (2.1) dans le sens longitudinal de l'élément tubulaire (1), dans laquelle la géométrie de la face frontale de la plaque de couverture (2) est choisie de manière à ce que celle-ci recouvre entièrement l'ouverture dans la face frontale de l'élément tubulaire (1), et comporte une deuxième section (2.2) consécutive à la première, du côté tourné vers l'élément tubulaire (1), dans laquelle la géométrie de la face frontale est choisie de manière à ce que la face frontale de la deuxième section (2.2) peut être insérée de façon ajustée dans l'élément tubulaire (1), et au moins un renfoncement (5, 6) est prévu dans la paroi latérale de la deuxième section (2.2) ainsi que du côté intérieur de l'élément tubulaire (1), dans lequel, lorsque le boîtier est fermé, l'au moins un renfoncement (5) dans la paroi latérale de la deuxième section se trouve en face de l'au moins un renfoncement (6) du côté intérieur de l'élément tubulaire (1), et dans la paroi de l'élément tubulaire (1) est prévue au moins une brèche (7) finissant dans le renfoncement (6) du côté intérieur de l'élément tubulaire (1), au moyen de laquelle l'espace creux formé par les deux renfoncements (5, 6) l'un en face de l'autre est rempli d'un matériau (8) fondant à une température entre 120 et 250°C, lequel est mécaniquement stable dans l'état solide au point que la plaque de couverture (2) est empêchée de sortir de l'élément tubulaire, malgré la force de ressort agissant sur elle.

2. Élément électromécanique de protection anti-surchauffe selon la revendication 1, **caractérisé en ce que** l'élément tubulaire (1) présente une section transversale circulaire, dans lequel l'au moins un renfoncement (5) dans la paroi latérale de la deuxième section (2.2) ainsi que du côté intérieur de l'élément tubulaire (1) est respectivement conçu comme une rainure annulaire périphérique et l'au moins une brèche (7) dans la paroi de l'élément tubulaire (1) est conçue comme un perçage.

3. Élément électromécanique de protection anti-surchauffe selon la revendication 2, **caractérisé en ce qu'**à côté de la plaque de couverture (2) fondant sous la chaleur, une plaque reliée fixement à l'élément tubulaire (1) est utilisée en tant que deuxième plaques de couverture (3), laquelle comporte une première section (3.1) dans laquelle la géométrie de la face frontale de la plaque de couverture (3) est choisie de manière à ce que celle-ci recouvre entièrement l'ouverture dans le côté frontal de l'élément tubulaire (1), et comporte une deuxième section (3.2) consécutive à la première, du côté tourné vers l'élément tubulaire (1), dans laquelle la géométrie de la face frontale est choisie plus petite que la largeur intérieure de l'élément tubulaire (1), permettant ainsi à la deuxième section (3.2) de pouvoir être insérée dans l'élément tubulaire (1), et la plaque de couverture (3) est reliée fixement à l'élément tubulaire (1), au moyen de tiges de fixation introduites dans des perçages (10) s'étendant orthogonalement à travers la paroi de l'élément tubulaire (1) et pénétrant dans la paroi latérale de la deuxième section (3.2) de la plaque de couverture (3).

4. Élément électromécanique de protection anti-surchauffe selon la revendication 3, **caractérisé en ce que** la plaques de couverture (3) reliée fixement à l'élément tubulaire (1) est fixée au moyen de trois tiges de fixation (10), lesquels sont respectivement décalées les unes des autres selon un angle de 120° par rapport à la géométrie circulaire de la section transversale de l'élément tubulaire (1).

5. Élément électromécanique de protection anti-surchauffe selon l'une des revendications 1 à 4, **caractérisé en ce que** la fiche (13) ainsi que la douille (11) de la connexion par enfichage certifiée sont entourées de gaines isolantes enrobant les contacts électriques de la fiche (13) ou de la douille (11) de manière à éviter le contact, même lorsque l'élément de protection anti-surchauffe est détaché.

6. Élément électromécanique de protection anti-surchauffe selon l'une des revendications 1 à 5, **caractérisé en ce que** l'espace creux formé par les renfoncements (5, 6) est rempli d'une colle thermofusible.

7. Élément électromécanique de protection anti-surchauffe selon l'une des revendications 1 à 6, **caractérisé en ce que** l'élément tubulaire (1) est constitué d'un matériau friable.

8. Élément électromécanique de protection anti-surchauffe selon la revendication 7, **caractérisé en ce que** l'élément tubulaire (1) est constitué de céramique ou de faïence.

9. Utilisation de l'élément électromécanique de protection anti-surchauffe selon la revendication 1, pour l'insertion dans une connexion par enfichage préexistante, dans laquelle l'élément de raccordement de l'une des plaque de couverture (2) est conçu comme une douille encastrable photovoltaïque (12), et l'élément de raccordement de l'autre plaque de couverture (3) est conçu un connecteur encastrable photovoltaïque (14), à la manière de la connexion par enfichage préexistante.
